# DEMANDE DE BREVET EUROPEEN

(11) **EP 2 584 552 A1**
(43) Date de publication de la demande: **24.04.2013**
(21) Numéro de dépôt: 12189049.5
(22) Date de dépôt: 18.10.2012
(51) Int. Cl.: G09B 21/00

(54) **Appareil de diffusion audio et son utilisation pour informer et/ou guider et/ou aider une personne à se repérer**

(30) Priorité: 20.10.2011 FR 1159505
(71) Demandeur: Esium, 59650 Villeneuve d'Ascq (FR)
(72) Inventeur: Verschaeve, Pierre, 59420 Mouvaux (FR)
(74) Mandataire: Pronovem

(57) **Abrégé**

L'appareil de diffusion audio est transportable et est conçu de manière à pouvoir être posé de manière stable sur un plan horizontal. Il comporte un premier (4) et un deuxième (5) modules de diffusion audio; le premier module de diffusion audio (4) comporte des moyens (40,41,42,43,44) de diffusion audio d'une ou plusieurs informations audio préenregistrées, et est conçu pour être commandé à distance au moyen d'une télécommande sans fil (T). Le deuxième module de diffusion audio (5) comporte un microphone (51) couplé à une boucle magnétique (50).

## Description

### Domaine technique

La présente invention concerne le domaine de la diffusion d'informations audio dans le but de guider ou d'aider des personnes à se repérer dans un environnement et/ou de fournir des informations audio à des personnes dans un environnement. L'invention trouve principalement, mais pas exclusivement son application dans le domaine de la diffusion d'informations audio à des personnes non-voyantes ou malvoyantes et à des personnes ayant des déficiences auditives.

### Art antérieur

Il existe à ce jour différentes solutions techniques qui permettent par exemple à une personne de se repérer ou d'obtenir des informations dans un environnement, et qui mettent en oeuvre des balises informationnelles fixes réparties dans cet environnement. Ces balises informationnelles fixes sont commandables à distance au moyen d'une télécommande sans fil manipulable par ladite personne et sont aptes à diffuser une ou plusieurs informations audio préenregistrées. L'information audio est selon le cas diffusée localement par un haut-parleur et/ou est émise par ondes radiofréquences vers un récepteur adapté porté par la personne. La plupart du temps ces solutions sont dédiées au guidage ou au repérage d'une personne malvoyante ou non voyante dans un environnement. Mais elles peuvent également être adaptées et utilisées par des personnes voyantes afin de les aider par exemple à se repérer rapidement dans un environnement ou afin d'obtenir des informations sur cet environnement.

Différentes solutions technique de ce type sont décrites notamment dans les demandes de brevet suivantes : WO 03/044757, WO 03/075245, US 4 660 022, US 6 097 305, US 5 508 699, US 5 144 294, EP 2 093 743.

Dans ces solutions, l'information audio qui est diffusée doit être préenregistrée dans une mémoire des balises informationnelles, ce qui limite les possibilités d'applications et/ou d'utilisation de ces balises informationnelles.

### Objectif de l'invention

L'invention a pour objectif de proposer un nouvel appareil de diffusion audio dont les fonctionnalités de diffusion sont plus étendues.

### Résumé de l'invention

Selon un premier aspect, l'invention a ainsi pour objet un appareil de diffusion audio tel que défini dans la revendication 1.

Plus particulièrement, mais de manière facultative selon l'invention, l'appareil de diffusion audio de l'invention peut comporter les caractéristiques techniques additionnelles et optionnelles ci-après, prises isolément ou en combinaison :
- il comporte une plaque servant de support à la boucle magnétique.
- la plaque comporte sur sa tranche une gorge périphérique, dans laquelle est logée la boucle magnétique.
- l'appareil est conçu de manière à pouvoir être posé de manière stable sur un plan horizontal avec la plaque positionnée verticalement.
- la plaque est transparente ou translucide.

Selon un deuxième aspect, l'invention a pour objet un appareil de diffusion audio, comportant un premier et un deuxième modules de diffusion audio ; le premier module de diffusion audio comporte des moyens de diffusion audio d'une ou plusieurs informations audio préenregistrées, et est conçu pour être commandé à distance au moyen d'une télécommande sans fil ; le deuxième module de diffusion audio comporte un microphone couplé à une boucle magnétique ; l'appareil comporte en outre une plaque servant de support à la boucle magnétique et est conçu de manière à pouvoir être posé de manière stable sur un plan horizontal avec la plaque positionnée verticalement.

Plus particulièrement, mais de manière facultative selon l'invention, l'appareil de diffusion audio de l'invention peut comporter les caractéristiques techniques additionnelles et optionnelles ci-après, prises isolément ou en combinaison :
- l'appareil est portatif ;
- la plaque comporte sur sa tranche une gorge périphérique, dans laquelle est logée la boucle magnétique.

Selon un troisième aspect, l'invention a pour objet un appareil de diffusion audio, comportant un premier et un deuxième modules de diffusion audio ; le premier module de diffusion audio comporte des moyens de diffusion audio d'une ou plusieurs informations audio préenregistrées, et est conçu pour être commandé à distance au moyen d'une télécommande sans fil ; le deuxième module de diffusion audio comporte un microphone couplé à une boucle magnétique ; l'appareil comporte en outre une plaque qui sert de support à la boucle magnétique et qui comporte sur sa tranche une gorge périphérique, dans laquelle est logée la boucle magnétique.

Plus particulièrement, mais de manière facultative selon l'invention, l'appareil de diffusion audio de l'invention peut comporter les caractéristiques techniques additionnelles et optionnelles ci-après, prises isolément ou en combinaison :
- l'appareil est portatif ;
- l'appareil est conçu de manière à pouvoir être posé de manière stable sur un plan horizontal avec la plaque positionnée verticalement.

Plus particulièrement, mais de manière facultative selon l'invention, quel que soit le premier, deuxième ou troisième aspect précité, l'appareil de diffusion audio de l'invention peut comporter les caractéristiques techniques additionnelles et optionnelles ci-après, prises isolément ou en combinaison :
- Il comporte un ou plusieurs boîtiers qui servent de logement au moins aux moyens de diffusion audio du premier module de diffusion audio, et à des moyens électroniques permettant le couplage électronique du microphone avec la boucle magnétique (50).
- Ledit ou lesdits boîtiers permettent plus particulièrement d'assurer la stabilité de l'appareil lorsqu'il est posé sur un plan horizontal.
- il comporte un premier boîtier et un deuxième boîtier qui sont fixés de part et d'autre de la plaque, de manière à assurer la stabilité de l'appareil lorsqu'il est posé sur un plan horizontal ; les deux boîtiers servent de logement au moins aux moyens de diffusion audio du premier module de diffusion audio, et à des moyens électroniques permettant le couplage électronique du microphone avec la boucle magnétique ; plus particulièrement, dans une variante de réalisation, le premier boîtier contient les moyens de diffusion audio du premier module de diffusion audio, et le deuxième boîtier contient les moyens électroniques permettant le couplage électronique du microphone avec la boucle magnétique.
- le microphone est fixé ou peut être fixé sur l'un des boîtiers.
- le premier module de diffusion audio permet un audio-repérage, notamment pour des personnes malvoyantes ou non-voyantes.
- le premier module de diffusion audio comporte des moyens de diffusion audio permettant de diffuser un message audio correspondant à une information de localisation, de manière à permettre un audio-repérage, notamment pour des personnes malvoyantes ou non-voyantes.

L'invention a également pour objet l'utilisation de l'appareil susvisé pour informer et/ou guider et/ou aider une personne à se repérer dans un environnement, ladite personne étant équipée d'une télécommande lui permettant de commander à distance le premier module de diffusion audio de l'appareil et/ou étant appareillée avec un récepteur auditif, conçu pour décoder un signal émis par la boucle magnétique.

### Brève description des figures

Une variante particulière de réalisation de l'invention va à présent être décrite en détails, à titre d'exemple non limitatif et non exhaustif de l'invention, et en référence aux dessins annexés sur lesquels :
- la figure 1 représente un exemple d'appareil de diffusion audio de l'invention ;
- la figure 2 est une vue de face de l'appareil de la figure 1 ;
- la figure 3 est une vue arrière de l'appareil de la figure 1 ;
- la figure 4 est une vue de côté de la plaque et de la boucle magnétique de l'appareil de la figure 1 ;
- la figure 5 est un schéma bloc montrant l'architecture électronique des deux modules de diffusion audio de l'appareil.

### Description détaillée

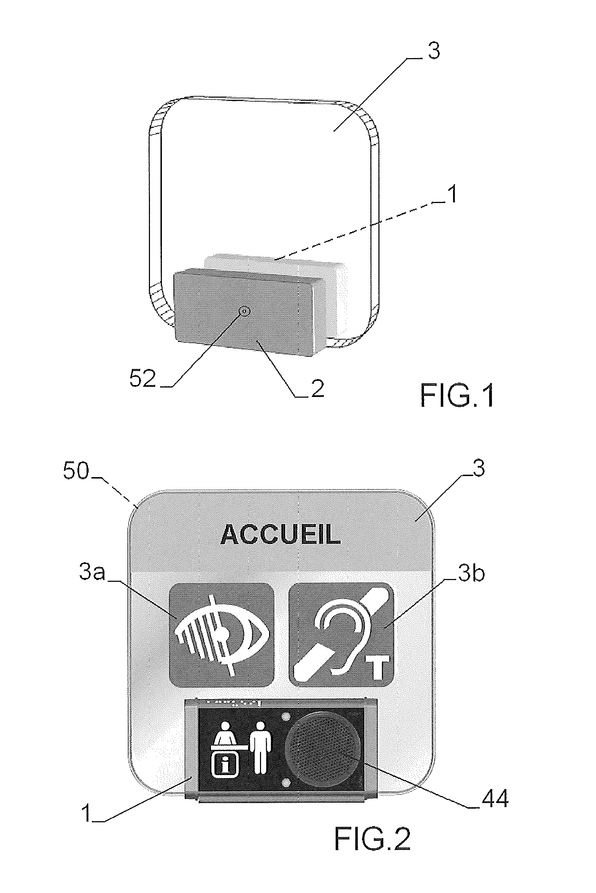

En référence à la variante particulière de réalisation des figures 1 à 3, l'appareil de diffusion audio portatif comporte deux boîtiers 1 et 2, qui sont assemblés de part et d'autre d'une plaque 3, de telle sorte que l'appareil peut être facilement transporté et posé de manière stable sur un support plan horizontal dans la position illustrée sur la figure 1, c'est-à-dire avec la plaque 3 positionnée sensiblement dans un plan vertical dans le cas de cette variante particulière de réalisation. Cet appareil portatif peut ainsi facilement être utilisé dans tout lieu en étant par exemple posé sur une table, un bureau, un comptoir, une console, etc....

La plaque 3 est de préférence, mais non nécessairement transparente ou translucide, et peut avantageusement servir de support de communication. A cet effet, des étiquettes informationnelles 3a (pictogrammes) peuvent être collées sur la plaque 3 ou des informations (pictogrammes) peuvent avoir été imprimées ou gravées sur la plaque 3. La plaque 3 est par exemple une plaque en verre ou en plastique.

Dans la variante particulière de réalisation illustrée sur les figures annexées, la plaque 3 sert de support à une boucle magnétique 50 constituée par un enroulement de fil de cuivre.

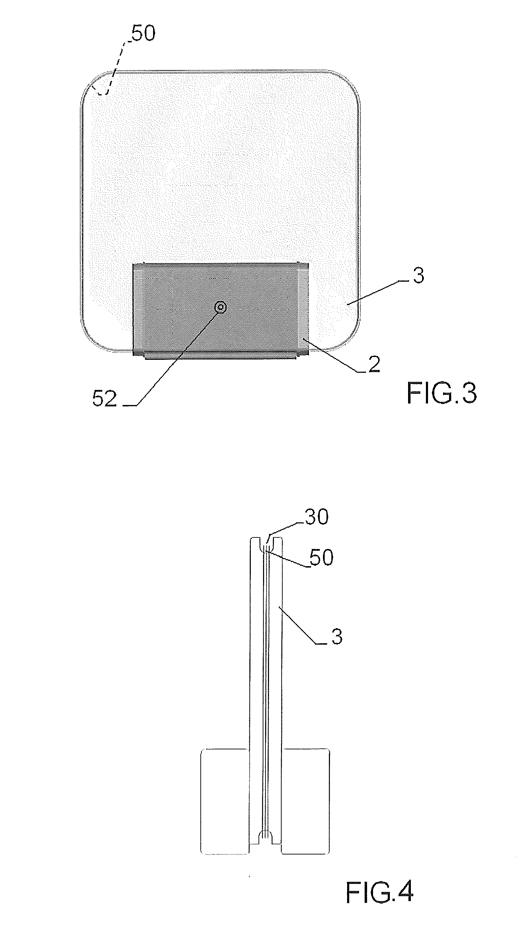

Plus particulièrement, en référence à la figure 4, la plaque 3 comporte sur sa tranche une gorge périphérique 30, dans laquelle la boucle magnétique 50 est enroulée et logée. De la sorte, il est possible de réaliser une boucle magnétique de grande dimension, et de ce fait de grande portée, sans nuire à l'esthétique de la plaque 3.

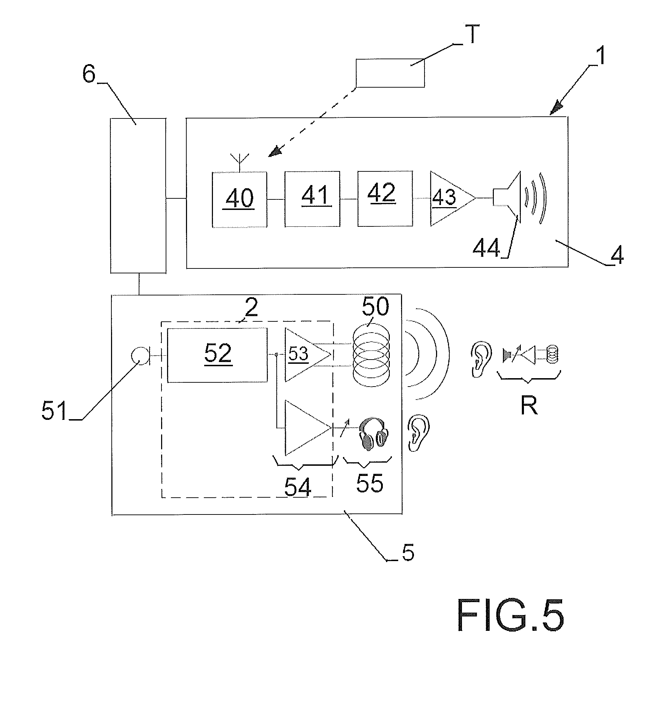

Le boîtier 1 contient la carte électronique d'un premier module de diffusion audio 4 (figure 5) conçu pour être commandé à distance au moyen d'une télécommande sans fil T, et pour diffuser une ou plusieurs informations audio préenregistrées dans une mémoire.

L'autre boîtier 2 contient la carte électronique d'un deuxième module de diffusion audio 5 comportant un microphone 51 qui est couplé à la boucle magnétique 50 précitée. Le microphone 51 est fixé sur le boîtier 2 au moyen d'une prise adaptée 52 (figures 1 et 3).

Les cartes électroniques des deux modules de diffusion audio 4 et 5 sont alimentées électriquement au moyen d'une alimentation électrique 6 commune, qui peut être logée à l'intérieur de l'un ou l'autre des boîtiers 1,2.

Dans une autre variante, les moyens électroniques précités des deux modules 4et 5 pourraient être logés dan les deux boîtiers 1, 2 en étant répartis d'une manière différente dans les deux boîtiers.

### Premier module de diffusion audio 4

En référence à la figure 5, le premier module de diffusion audio 4 comporte un récepteur radiofréquence (RF) 40, un module électronique 41 de décodage des signaux reçus par le récepteur RF 40, une mémoire 42, par exemple de type RAM, dans laquelle sont stockés des messages audio, des moyens électroniques d'amplification 43, et des moyens de diffusion audio 44 , de type haut-parleur.

Un utilisateur, par exemple une personne malvoyante ou non-voyante, muni d'une télécommande T, peut commander à distance le premier module de diffusion audio 4, en envoyant un signal RF au moyen de sa télécommande T. Ce signal RF est capté par le récepteur 40, puis est décodé par le module de décodage 41. Ce module de décodage 41 commande la mémoire 42 de manière à faire diffuser par le haut-parleur 44, le message audio qui est préenregistré dans la mémoire 42 et qui est associé au signal RF émis par la télécommande T.

Lorsque les messages audio enregistrés dans la mémoire 42 correspondent à des informations de localisation, le premier module de diffusion audio 4 permet avantageusement un audio-repérage, notamment pour des personnes malvoyantes ou non-voyantes.

### Deuxième module de diffusion audio 5

En référence à la figure 5, le deuxième module de diffusion audio 5 comporte la boucle magnétique 50 et le microphone 51 précédemment décrits, et entre ces deux éléments 50,51, un module électronique 52 (compresseur + squelsh) assurant de manière connue en soi la gestion du microphone 51, et des moyens électroniques d'amplification 53 qui sont connectés en entrée à la sortie du module électronique 52, et en sortie à la boucle magnétique 50.

Lorsqu'une personne prononce un message vocal dans le microphone 51, la boucle magnétique 50 émet de manière omnidirectionnelle un signal électromagnétique codant ce message vocal. Ce signal électromagnétique peut être capté par toute personne, par exemple malentendante, qui se trouve à portée de la boucle magnétique 50, et qui est appareillée (de manière connue en soi) avec un récepteur auditif R, conçu pour décoder le signal électromagnétique et pour le restituer sous forme audio après amplification.

De manière optionnelle, le deuxième module de diffusion audio 5 peut également comporter des moyens électroniques 53 d'amplification et d'émission qui sont aptes à émettre de manière omnidirectionnelle un signal RF codant tout message vocal capté par le microphone 51. Ce signal RF peut être est capté à distance et restitué de manière audio au moyen d'un casque audio adapté 55.

L'invention n'est pas limitée à la variante particulière de réalisation des figurex annexées mettant en oeuvre deux boîtiers 1, 2 de part et d'autre d'une plaque verticale, mais peut s'étendre notamment à tout appareil de diffusion portatif apte à être posé de manière stable sur un plan horizontal. Dans une autre variante, la stabilité de l'appareil pourrait par exemple être obtenue au moyen d'un seul boîtier. L'invention n'est pas limitée à la variante particulière de réalisation des figures annexées dans laquelle la boucle magnétique est logée dans une gorge périphérique ménagée dans la tranche de la plaque 3. Dans une autre variante, la boucle magnétique peut être fixée sur l'une des deux faces de la plaque 3, ou la plaque peut être une plaque multicouche avec la boucle magnétique insérée entre deux couches. La boucle magnétique peut également être réalisée sous la forme d'un circuit imprimé porté par la plaque.

## Revendications

1. Appareil de diffusion audio transportable, conçu de manière à pouvoir être posé de manière stable sur un plan horizontal, comportant un premier (4) et un deuxième (5) modules de diffusion audio, le premier module de diffusion audio (4) comportant des moyens (40,41,42,43,44) de diffusion audio d'une ou plusieurs informations audio préenregistrées, et étant conçu pour être commandé à distance au moyen d'une télécommande sans fil (T), le deuxième module de diffusion audio (5) comportant un microphone (51) couplé à une boucle magnétique (50).

2. Appareil selon la revendication 1, comportant une plaque (3) servant de support à la boucle magnétique (50).

3. Appareil selon la revendication 2 dans lequel la plaque (3) comporte sur sa tranche une gorge périphérique (30), dans laquelle est logée la boucle magnétique (50).

4. Appareil selon l'une quelconque des revendications 2 ou 3, conçu de manière à pouvoir être posé de manière stable sur un plan horizontal avec la plaque (3) positionnée verticalement.

5. Appareil selon l'une quelconque des revendications 2 à 4, dans lequel la plaque (3) est transparente ou translucide.

6. Appareil selon l'une quelconque des revendications 2 à 5 comportant un ou plusieurs boîtiers qui servent de logement au moins aux moyens (40,41,42,43,44) de diffusion audio du premier module de diffusion audio (4), et à des moyens électroniques (52,53) permettant le couplage électronique du microphone (51) avec la boucle magnétique (50).

7. Appareil selon l'une quelconque des revendications 2 à 5, comportant un premier boîtier (1) et un deuxième boîtier (2) qui sont fixés de part et d'autre de la plaque (3), et qui servent de logement au moins aux moyens (40,41,42,43,44) de diffusion audio du premier module de diffusion audio (4), et à des moyens électroniques (52,53) permettant le couplage électronique du microphone (51) avec la boucle magnétique (50).

8. Appareil selon la revendication 7, dans lequel le premier boîtier contient les moyens (40,41,42,43,44) de diffusion audio du premier module de diffusion audio (4), et le deuxième boîtier contient les moyens électroniques (52,53) permettant le couplage électronique du microphone (51) avec la boucle magnétique (50).

9. Appareil selon l'une quelconque des revendications 6 à 8 dans lequel le microphone est fixé ou peut être fixé sur l'un des boîtiers.

10. Appareil selon l'une quelconque des revendications 1 à 9, dans lequel le premier module de diffusion audio comporte des moyens de diffusion audio permettant de diffuser un message audio correspondant à une information de localisation, de manière à permettre un audio-repérage, notamment pour des personnes malvoyantes ou non-voyantes.

11. Utilisation de l'appareil visé à l'une quelconque des revendications précédentes pour informer et/ou guider et/ou aider une personne à se repérer dans un environnement, ladite personne étant équipée d'une télécommande (T) lui permettant de commander à distance le premier module de diffusion audio (4) de l'appareil et/ou étant appareillée avec un récepteur auditif (R), conçu pour décoder un signal émis par la boucle magnétique (50).
